# EUROPÄISCHE PATENTSCHRIFT

(11) **EP 3 162 699 B1**
(45) Veröffentlichungstag und Bekanntmachung des Hinweises auf die Patenterteilung: **04.12.2019**
(21) Anmeldenummer: 16194737.9
(22) Anmeldetag: 20.10.2016
(51) Int. Cl.: B64C 1/12, B64C 1/06

(54) **STRUKTURANORDNUNG, LUFT- ODER RAUMFAHRZEUG UND VERFAHREN ZUM HERSTELLEN EINER STRUKTURANORDNUNG**
STRUCTURAL ASSEMBLY, AIR OR SPACECRAFT AND METHOD FOR PRODUCING A STRUCTURAL ASSEMBLY
SYSTÈME STRUCTUREL, AVION OU ENGIN SPATIAL ET PROCÉDÉ DE FABRICATION D'UN SYSTÈME STRUCTUREL

(30) Priorität: 22.10.2015 DE 102015220642
(43) Veröffentlichungstag der Anmeldung: 03.05.2017
(73) Patentinhaber: Airbus Defence and Space GmbH, 82024 Taufkirchen (DE)
(72) Erfinder: BREU, Christoph, 83101 Rohrdorf (DE)
(74) Vertreter: Isarpatent

(56) Entgegenhaltungen:
- DE-A1-102013 021 066
- DE-B3-102008 057 247
- DE-B3-102012 019 905
- DE-C- 674 433
- GB-A- 540 652
- US-A- 6 114 050

## Beschreibung

Die vorliegende Erfindung betrifft eine Strukturanordnung für ein Luft- oder Raumfahrzeug, insbesondere eine Rumpfstrukturanordnung, ein Luft- oder Raumfahrzeug sowie ein Verfahren zum Herstellen einer Strukturanordnung.

Obwohl auf beliebige Strukturen anwendbar, werden die vorliegende Erfindung sowie die ihr zugrunde liegende Problematik in Bezug auf einen Flugzeugrumpf näher erläutert.

Flugzeugrümpfe existieren in unterschiedlichen Ausführungsformen. Insbesondere für Kurzstreckenflugzeuge werden Flugzeugrümpfe zumeist mit metallischen Spanten und Stringern, die mit einer metallischen Außenhaut verbunden sind, vorgesehen. Diese Bauweise ist vergleichsweise robust, schadenstolerant und reparaturfreundlich. Ferner ist mit der metallischen Ausführung ein guter Blitzschutz gegeben.

Insbesondere für Langstreckenflugzeuge werden moderne Flugzeugrümpfe in einer Faserverbundbauweise vorgesehen. Dabei können sowohl Stringer und Spanten als auch eine die Stringer und/oder Spanten überspannende Außenhaut aus einem Faserverbundwerkstoff, vorzugsweise kohlefaserverstärktem Kunststoff, vorgesehen sein. Eine derartige Struktur ist besonders gewichtsparend. Zum Blitzschutz wird dabei üblicherweise ein in die Außenhaut integriertes Gewebe oder Netz aus Kupfer (Kupfermesh) vorgesehen. Zum elektrischen Potenzialausgleich werden im Inneren des Rumpfes zusätzliche Einrichtungen, beispielsweise in Form eines sogenannten ESN-Network, vorgesehen.

Weitere Bauweisen, sogenannte Hybridbauweisen, von Flugzeugrümpfen umfassen sowohl metallene Strukturelemente als auch Faserverbundstrukturelemente. Eine solche Hybridbauweise ist beispielsweise in der DE 10 2007 003 277 B4 beschrieben. Auch diese weist eine Außenhaut aus einem Faserverbundwerkstoff auf, in welche ein metallisches Netz bzw. Gewebe (metal mesh) integriert

Ein wesentlicher Stand der Technik ist durch DE 10 2013 021 066 A gegeben.

Es ist Aufgabe der vorliegenden Erfindung, eine verbesserte Strukturanordnung für ein Luft- oder Raumfahrzeug bereitzustellen.

Erfindungsgemäß wird diese Aufgabe durch eine Strukturanordnung mit den Merkmalen des Patentanspruchs 1 und/oder ein Luft- oder Raumfahrzeug mit den Merkmalen des Patentanspruchs 11 und/oder ein Verfahren zum Herstellen einer Strukturanordnung mit den Merkmalen des Patentanspruchs 13 gelöst.

Demgemäß ist vorgesehen:
- Eine Strukturanordnung für ein Luft- oder Raumfahrzeug, insbesondere Rumpfstrukturanordnung, mit: einem Spant; einer metallischen Haut; und einer Faserverbundschicht, welche in einer quer zu dem Spant verlaufenden Richtung regelmäßig strukturiert ausgebildet und zwischen dem Spant und der metallischen Haut angeordnet ist.
- Ein Luft- oder Raumfahrzeug mit einem Rumpf, der eine erfindungsgemäße Strukturanordnung aufweist.
- Ein Verfahren zum Herstellen einer Strukturanordnung, insbesondere einer erfindungsgemäßen Strukturanordnung, mit folgenden Verfahrensschritten: Bereitstellen eines Spants, einer metallischen Haut sowie einer regelmäßig strukturiert ausgebildeten Faserverbundschicht; Ausrichten der Faserverbundschicht relativ zu dem Spant derart, dass sie in einer Richtung quer zu dem Spant strukturiert angeordnet ist; Befestigen der Faserverbundschicht mit dem Spant; und Befestigen der metallischen Haut mit der Faserverbundschicht.

Die der vorliegenden Erfindung zugrunde liegende Idee besteht darin, eine in Längsrichtung eines Flugzeugrumpfes tragende Struktur ohne Stringer, sondern mit einer durchgehenden in Längsrichtung strukturierten Faserverbundschicht vorzusehen und diese Faserverbundschicht mit einer metallischen Haut versehen.

Vorteilhaft kann die Faserverbundschicht an die aufzunehmenden Lasten angepasst ausgebildet bzw. ausgelegt sein, insbesondere ohne Rücksicht auf sogenannte Impactanforderungen, das heißt unregelmäßige äußere Belastungen, wie sie beispielsweise bei Steinschlag auftreten, nehmen zu müssen. Die metallische Haut kann hingegen für derartige Impactanforderungen, das heißt beispielsweise mit einer hohen Duktilität und gleichzeitig für optimalen Blitzschutz ausgebildet sein, ohne dabei Rücksicht auf die herkömmlichen Rumpflasten nehmen zu müssen, die von der Faserverbundschicht und dem Spant getragen werden.

Erfindungsgemäß ist somit eine neuartige Hybridbauweise geschaffen, welche in synergetischer Weise eine robuste Rumpfstrukturanordnung mit hoher Schadenstoleranz und gleichzeitig einem ähnlichen Gewichtsvorteil wie eine reine Faserverbundbauweise ermöglicht. Dabei sind erfindungsgemäß zudem die Anforderungen einer Rumpfstrukturanordnung an den Blitzschutz und den elektrischen Potenzialausgleich gewährleistet.

Zusätzlich wird erfindungsgemäß der üblicherweise für eine Vielzahl einzelner Stringer notwendige Bauaufwand eliminiert. Stattdessen kann eine großflächige Faserverbundschicht eingesetzt werden, welche mit einem deutlich geringeren Aufwand herstellbar ist. Somit entsteht erfindungsgemäß ein Kostenvorteil.

Insbesondere kommt die erfindungsgemäße Faserverbundschicht vorteilhaft mit einer geringeren Bauhöhe als bei Stringern üblich aus, sodass zusätzlich nutzbarer umfänglicher Bauraum freigegeben wird. Darüber hinaus eröffnet die Strukturierung der Faserverbundstruktur in Längsrichtung insbesondere bereits integrierte Kanäle, welche zur Leitungsführung und/oder Belüftung und/oder zur aktiven Isolierung des Rumpfes genutzt werden können. Somit kann ein Luft- oder Raumfahrzeug mit einem derartigen Rumpf auf neuartige Weise mit verbessertem Package konstruiert werden.

Ferner wird erfindungsgemäß auch eine verbesserte Recyclebarkeit bereitgestellt, da die metallische Haut von der Faserverbundschicht leichter trennbar ist, als ein integriertes Kupfermesh einer Faserverbundhaut von dem Fasermaterial. Somit ist beispielsweise eine Wiederverwendung der Fasern nach einer Pyrolyse deutlich einfacher ermöglicht.

Bei dem Spant handelt es sich insbesondere um ein tragendes Bauteil eines Rumpfes, welches Lasten in Umfangsrichtung eines Rumpfes bzw. quer zur Längsrichtung aufnimmt. Alternativ wäre es aber auch denkbar, Lasten in Umfangsrichtung bzw. quer zur Längsrichtung mittels der Faserverbundschicht und Lasten in Längsrichtung mit einem solchen tragenden Bauteil aufzunehmen. In Zusammenhang mit der vorliegenden Erfindung ist der Begriff Spant somit in allgemeiner Weise als tragendes Bauteil zur Verstärkung einer Strukturanordnung, insbesondere eines Rumpfes, unabhängig von der Ausrichtung zu verstehen. Insbesondere wäre es daher auch denkbar, bei einem Flugzeugrumpf anstatt der Stringer die Spanten durch die Faserverbundschicht zu ersetzen.

Die Faserverbundschicht und die metallische Haut erstrecken sich vorzugsweise großflächig über den Spant, wobei der Spant insbesondere die Formgebung der Strukturanordnung bestimmt.

In den Unteransprüchen finden sich vorteilhafte Ausgestaltungen und Verbesserungen der Erfindung.

Erfindungsgemäß weist die Faserverbundschicht eine sich im Querschnitt periodisch wiederholende Form, insbesondere eine Wellblechstruktur oder eine Trapezblechstruktur, auf. Somit ist vorteilhaft eine einfach herstellbare Strukturierung geschaffen, die in ihrer Ausrichtung eine tragende Funktion übernimmt. Unter einem Wellblech ist ein im Querschnitt periodisch gewelltes Blech zu verstehen. Unter einem Trapezblech ist ein im Querschnitt periodisch vierfach abgekantetes, insbesondere schräg abgekantetes, Blech zu verstehen.

Gemäß einer bevorzugten Ausführungsform überdeckt die metallische Haut die Faserverbundschicht vollständig. Vorteilhaft ist die tragende Faserverbundschicht daher vollflächig durch die metallische Haut bezüglich Impactszenarien geschützt und kann daher auf reguläre Belastungen hin ausgelegt werden. Ferner ist so vorteilhaft kein zusätzliches Blitzschutzelement nötig.

Gemäß einer vorteilhaften Ausführungsform ist die metallische Haut mit einem duktilen und/oder leitfähigen Metall ausgebildet. Somit weist die metallische Haut vorteilhaft eine erhöhte Schadenstoleranz sowie gute Blitzschutzeigenschaften auf. Beispielsweise kann es sich bei einem duktilen und leitfähigen Material um Aluminium handeln.

Gemäß einer Ausführungsform ist die Faserverbundschicht in regelmäßigen Abständen an dem Spant und/oder der metallischen Haut befestigt. Insbesondere ist die Faserverbundschicht an denjenigen Abschnitten ihrer Strukturierung an dem Spant befestigt, welche direkt an dem Spant anliegen. Im Falle einer Wellblechstruktur sind dies beispielsweise die periodisch wiederkehrenden innenseitigen Gipfel des Wellblechs.

Gemäß einer vorteilhaften Ausführungsform weist die Faserverbundschicht zumindest lokal eine thermoplastische Deckschicht auf. Somit ist ein Verbinden der Faserverbundschicht mit der metallischen Haut und/oder dem Spant auf einfache Weise durch thermoplastisches Schweißen ermöglicht. Alternativ oder zusätzlich können dazu auch der Spant und/oder die metallische Haut zumindest lokal eine thermoplastische Deckschicht aufweisen. Die thermoplastische Deckschicht kann bei der Herstellung der Faserverbundschicht als thermoplastische Folie auf die Oberfläche aufgebracht und im Aushärteprozess mit der Faserverbundschicht damit verschweißt bzw. verbacken werden. Insbesondere kann die thermoplastische Folie im Aushärteprozess aufgebracht werden. Analog ist dies auch bei einem in Faserverbundbauweise hergestellten Spant möglich. Ferner kann auch die metallische Haut zumindest lokal mit einer thermoplastischen Schicht überzogen werden, indem ebenfalls eine Folie auf ihre Oberfläche aufgebracht wird und die metallische Haut einer Wärmebehandlung oberhalb einer Glasübergangstemperatur der thermoplastischen Folie unterzogen wird. Die Oberfläche der metallischen Haut kann dazu entsprechend vorbereitet sein, beispielsweise mit einer Aufrauhung oder Strukturierung, damit das thermoplastische Material darauf gut haftet. Alternativ wäre es auch denkbar, die thermoplastische Deckschicht jeweils in einem flüssigen Zustand in der Art eines Anstrichs aufzutragen.

Gemäß einer Weiterbildung ist die Faserverbundschicht dementsprechend mit dem Spant thermoplastisch verschweißt vorgesehen. Alternativ oder zusätzlich kann die Faserverbundschicht dementsprechend auch mit der metallischen Haut thermoplastisch verschweißt vorgesehen sein. Das thermoplastische Verschweißen kann beispielsweise mittels Laserstrahlschweißen oder Ultraschallschweißen erfolgen. Vorteilhaft ist somit eine einfach und schnell zu verarbeitende Verbindungstechnik zum Herstellen der Strukturanordnung bereitgestellt.

Gemäß einer Ausführungsform ist ein den Spant stützender Clip mit dem Spant und/oder der Faserverbundschicht thermoplastisch verschweißt vorgesehen. Somit ist vorteilhaft auch eine einfach und schnell zu verarbeitende Verbindungstechnik zum Befestigen eines Clips bereitgestellt. Insbesondere ist der Clip mit einem an der Faserverbundschicht befestigten Fußabschnitt und einem mit dem Spant befestigten Stützabschnitt gebildet. Der Clip schützt den Spant so gegen ein Verkippen.

Gemäß einer weiteren Ausführungsform ist die Faserverbundschicht mit dem Spant und/oder mit der metallischen Haut verklebt und/oder vernietet vorgesehen. Denkbar sind auch Kombinationen aus thermoplastisch verschweißter und verklebter und/oder vernieteter Verbindung. Beispielsweise wäre eine Kombination aus thermoplastisch verschweißter und zusätzlich, insbesondere teilweise, vernieteter Verbindung oder eine Kombination aus thermoplastisch verschweißter und lokal, beispielsweise an schwer zugänglichen Stellen, zusätzlich verklebter Verbindung denkbar. Eine Verbindung der metallischen Haut zur Faserverbundschicht ist vorzugsweise derart vorgesehen, dass die metallische Haut gegen Kontaktkorrosion geschützt ist.

Gemäß einer Ausführungsform sind zwischen der Faserverbundschicht und der metallischen Haut Halterungen zur Befestigung vorgesehen. Insbesondere können diese Halterungen an einer Seite an die Kontur der Faserverbundschicht angepasst sein und an der anderen Seite eine flächige Auflage oder eine mit einer durch den Spant vorgegebenen Krümmung der Strukturanordnung leicht gekrümmt ausgebildeten Auflage für die metallische Haut bereitstellen. Vorteilhaft kann die Haut somit sicher an der Faserverbundschicht befestigt werden. Beispielsweise können die Halterungen keilartig ausgebildet sein und im Bereich eines außenseitigen Gipfels der Wellblechstruktur der Faserverbundschicht links und rechts des Gipfels angeordnet vorgesehen sein.

Gemäß einer Weiterbildung sind die Halterungen zum Ausgleichen unterschiedlicher Wärmedehnungen ausgebildet Vorteilhaft ist die Strukturanordnung somit bei unterschiedlichsten Temperaturbedingungen einsetzbar. Beispielsweise können die Halterungen dazu ein flexibles Material enthalten. Insbesondere kann es sich zudem um ein thermoplastisches Material oder um ein mit einer thermoplastischen Deckschicht überzogenes Material handeln. Vorteilhaft kann die Halterung so bei einem Befestigen der Haut mit der Faserverbundschicht mittels Thermoplastschweißen direkt in einem einzigen Prozessschritt mit befestigt werden.

Gemäß einer Ausführungsform eines Luft- oder Raumfahrzeugs weist der Rumpf zumindest zwei Spanten auf, wobei sich die Strukturanordnung von Spant zu Spant fortsetzt. Vorteilhaft ist die erfindungsgemäße Strukturanordnung somit entlang des gesamten Rumpfes des Luft- oder Raumfahrzeugs einsetzbar.

Gemäß einer Ausführungsform des erfindungsgemäßen Verfahrens weisen die Faserverbundschicht und/oder der Spant und/oder die metallische Haut zumindest lokal eine thermoplastische Deckschicht auf. Das Befestigen wird dabei zumindest teilweise mittels Thermoplastschweißen vorgenommen. Vorteilhaft stellt dies eine einfach und schnell verarbeitbare Verbindungstechnik dar. Eine Kombination von Thermoplastschweißen mit Verkleben und/oder Vernieten zum Befestigen ist dabei möglich.

Die obigen Ausgestaltungen und Weiterbildungen lassen sich, sofern sinnvoll, beliebig miteinander kombinieren. Insbesondere sind Merkmale der Strukturanordnung auf das Verfahren zum Herstellen einer Strukturanordnung übertragbar, und umgekehrt.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden anhand von Ausführungsbeispielen unter Bezugnahme auf die beiliegenden Figuren der Zeichnung näher erläutert. Die Elemente der Zeichnungen sind nicht notwendigerweise maßstabsgetreu zueinander gezeigt.

Von den Figuren zeigen:
- Fig. 1: eine perspektivische Ansicht einer erfindungsgemäße Strukturanordnung;
- Fig. 2: eine schematische Schnittansicht einer Strukturanordnung im Bereich eines Clips gemäß einem ersten Ausführungsbeispiel;
- Fig. 3: eine schematische Schnittansicht einer Strukturanordnung im Bereich eines Clips gemäß einem zweiten Ausführungsbeispiel;
- Fig. 4: eine perspektivische Ansicht einer Strukturanordnung mit schematisch dargestellter Halterung;
- Fig. 5: eine schematische Querschnittansicht einer Faserverbundschicht;
- Fig. 6: eine schematische Querschnittansicht einer Faserverbundschicht gemäß einer weiteren Ausführungsform; und
- Fig. 7: eine schematische abschnittsweise Darstellung eines Rumpfes eines Luft-oder Raumfahrzeugs.

In den Figuren bezeichnen dieselben Bezugszeichen gleiche oder funktionsgleiche Komponenten, soweit nichts Gegenteiliges angegeben ist.

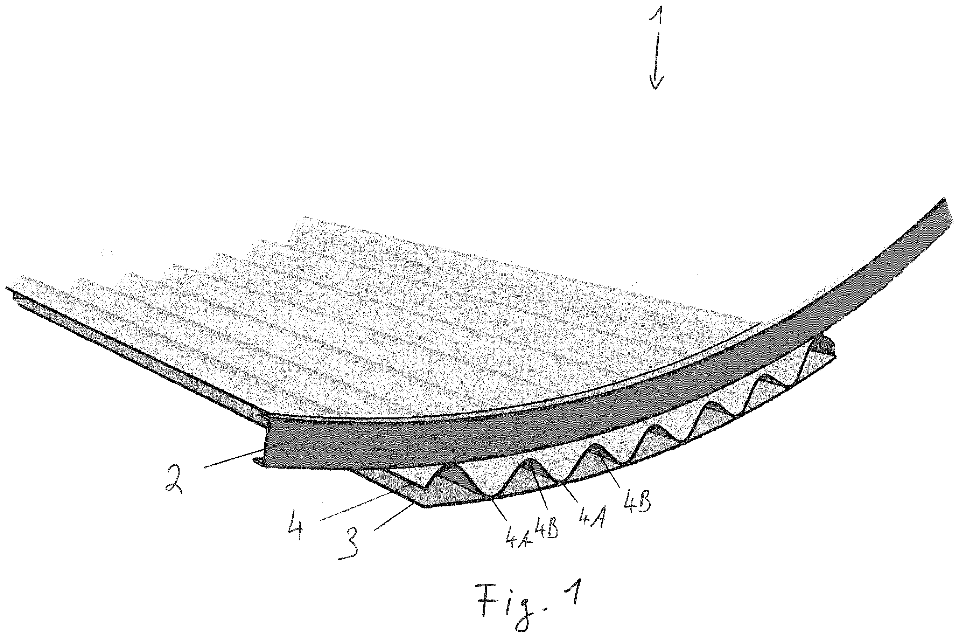

Fig. 1 zeigt eine perspektivische Ansicht einer erfindungsgemäßen Strukturanordnung 1.

Bei der Strukturanordnung 1 handelt es sich um eine Rumpfstrukturanordnung für ein Luft- oder Raumfahrzeug. Diese weist einen Spant 2, eine metallische Haut 3 sowie eine Faserverbundschicht 4 auf.

Die Faserverbundschicht 4 weist eine quer zu dem Spant 2 verlaufende Wellblechstruktur mit sich periodisch abwechselnden außenseitigen und innenseitigen Gipfeln 4A, 4B auf. Somit ist die Faserverbundschicht 4 in einer quer zu dem Spant 2 verlaufenden Richtung regelmäßig strukturiert ausgebildet.

Die Faserverbundschicht 4 ist dabei zwischen dem Spant 2 und der metallischen Haut 3 angeordnet. Ferner ist die Faserverbundschicht 4 an einer Außenseite vollständig mit der metallischen Haut 3 überzogen. Die metallische Haut 3 ist dabei mit der Faserverbundschicht 4 jeweils an den außenseitigen Gipfeln 4A der Wellblechstruktur befestigt.

An der Innenseite ist die Faserverbundschicht 4 mit ihren zu den außenseitigen Gipfeln 4A versetzten innenseitigen Gipfeln 4B mit dem Spant 2 befestigt.

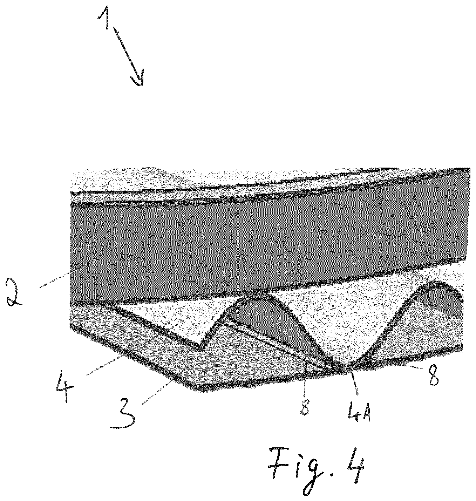

Die Befestigung ist jeweils mittels Thermoplastschweißen realisiert. Die Faserverbundschicht 4 weist dazu eine thermoplastische Deckschicht auf, worauf in Bezug Fig. 4 noch näher eingegangen wird. Alternativ oder zusätzlich können dazu auch der Spant 2 und/oder die Haut 3 eine thermoplastische Deckschicht aufweisen. Ferner kann die Befestigung alternativ oder zusätzlich auch mittels Kleben oder Nieten realisiert sein.

Beispielhaft ist der Spant 2 hier mit einem U-Profil ausgeführt. Andere Ausführungen des Spants, beispielsweise mit einem T-Profil oder Doppel-T-Profil (auch I-Profil genannt), sind aber ebenso möglich.

Die metallische Haut 3 ist mit einem Blech ausgeführt. Es handelt sich dabei um ein duktiles und leitfähiges Metall. Beispielsweise kann die metallische Haut als Aluminiumblech ausgeführt sein. Es können auch mehrere aneinander anschließende Bleche vorgesehen sein.

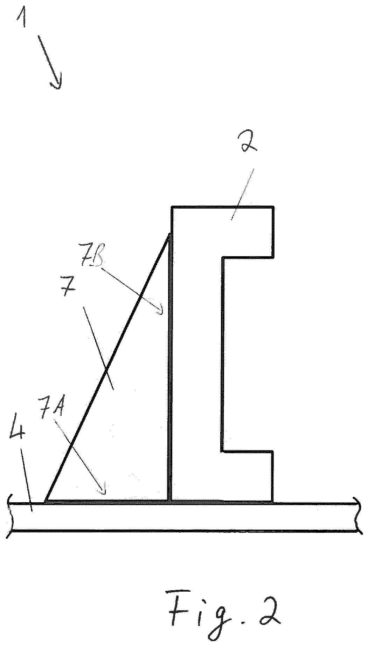

Fig. 2 zeigt eine schematische Schnittansicht einer Strukturanordnung 1 im Bereich eines Clips 7 gemäß einem ersten Ausführungsbeispiel.

Die gezeigte Schnittebene verläuft entlang eines innenseitigen Gipfels 4B der Faserverbundschicht 4. Sichtkanten sowie die metallische Haut 3 sind hier zur besseren Übersichtlichkeit nicht dargestellt.

Der Clip 7 weist einen Fußbereich 7A und einen Stützbereich 7B auf. Er ist in einem Stoßbereich des Spants 2 und der Faserverbundschicht 4 angeordnet und dient als Kippsicherung für den Spant 2.

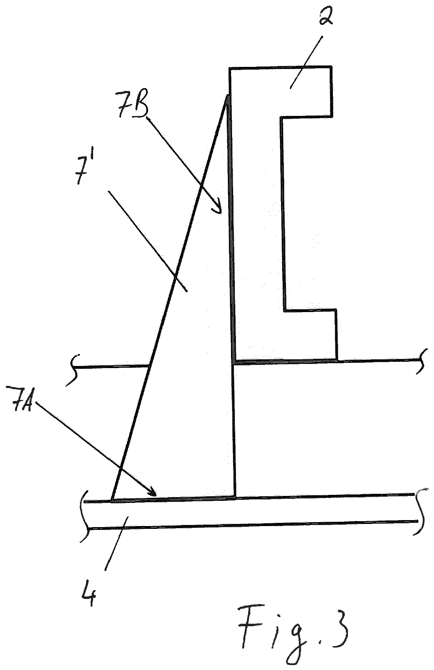

Fig. 3 zeigt eine schematische Schnittansicht einer Strukturanordnung im Bereich eines Clips 7' gemäß einem zweiten Ausführungsbeispiel.

Im Unterschied zu dem ersten Ausführungsbeispiel gemäß Fig. 2 verläuft die Schnittebene hier entlang eines außenseitigen Gipfels 4A.

Von dem Clip 7' teilweise verdeckt ist eine Sichtkante des nächstfolgenden innenseitigen Gipfels 4B eingezeichnet.

Demgemäß ist der Clip 7' hier im Bereich des außenseitigen Gipfels 4A vorgesehen und erstreckt sich einen Abstand zwischen dem Spant 2 und dem außenseitigen Gipfel 4A überbrückend mit seinem Fußbereich 7A bis auf den außenseitigen Gipfel 4A.

Auch hier dient der Clip 7' als Kippsicherung für den Spant 2.

Fig. 4 zeigt eine perspektivische Ansicht einer Strukturanordnung 1 mit schematisch dargestellter Halterung 8.

Die Halterung 8 ist hier rein beispielhaft als jeweils links und rechts eines außenseitigen Gipfels 4B der Wellblechstruktur der Faserverbundschicht 4 vorgesehener thermoplastischer Keil ausgebildet.

Alternative Ausführungen der Halterung 8 können auf vielfältige Weise gestaltet und an der Haut 3 bzw. der Faserverbundschicht 4 befestigt sein. Beispielsweise kann es sich um eine lediglich lokal vorgesehene metallische Halterung handeln, welche sich nicht durchgehend in Längsrichtung erstreckt.

Die Halterung wird beispielsweise vor oder während dem Befestigen der Haut 3 an der Faserverbundstruktur links und rechts des außenseitigen Gipfels 4B in den Spalt zwischen Faserverbundschicht und Haut 3 eingefügt. Die Halterung 8 stellt sodann eine vergrößerte Abstützfläche für die metallische Haut 3 bereit.

Bei einem Befestigen der Haut 3 an der Faserverbundschicht 4 mittels Thermoplastschweißen wird die Halterung 8 gleichzeitig an der Haut 3 und der Faserverbundschicht 4 mit befestigt. Alternativ oder zusätzlich kann die Halterung 8 auch durch Kleben oder Nieten befestigt werden.

Die Halterung 8 ist zum Ausgleichen unterschiedlicher Wärmedehnungen der metallischen Haut 3 und der Faserverbundschicht 4 ausgebildet. Beispielsweise ist die Halterung 8 dazu mit einem elastischen Thermoplastmaterial gebildet. Beispielsweise kann es sich um ein sogenanntes thermoplastisches Elastomer (TPE) handeln.

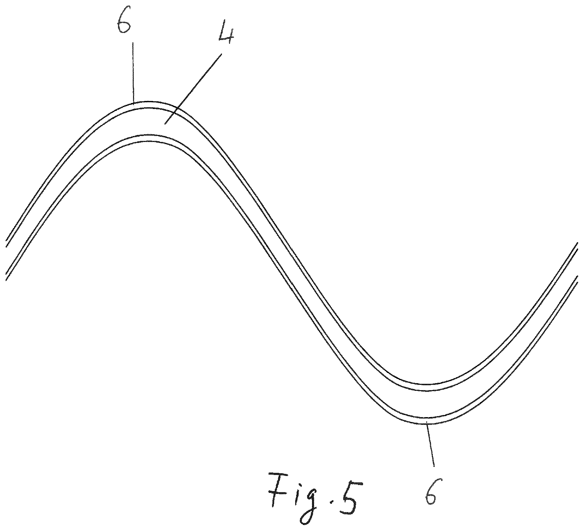

Fig. 5 zeigt eine schematische Querschnittansicht einer Faserverbundschicht 4.

Diese ist mit einer im Querschnitt periodisch wiederkehrenden Struktur gebildet, hier beispielhaft einer im Querschnitt sinusförmigen Wellblechstruktur. Sowohl an ihrer Innenseite als auch an ihrer Außenseite weist die Faserverbundschicht 4 eine thermoplastische Deckschicht 6 auf.

Die thermoplastische Deckschicht wird bei der Herstellung der Faserverbundschicht 4, vorzugsweise in einem Aushärtevorgang, in Form einer thermoplastischen Folie aufgebracht.

Lediglich beispielhaft ist die thermoplastische Deckschicht 6 hier an beiden Seiten der Faserverbundschicht 4 durchgängig vorgesehen. Alternativ wäre es auch denkbar, die thermoplastische Deckschicht lediglich an einer Seite und/oder lediglich lokal vorzusehen. Die thermoplastische Deckschicht 6 kann dazu insbesondere abhängig von den vorgesehenen Schweißzonen aufgebracht werden. Beispielsweise kann thermoplastische Deckschicht 6 dazu nur in den Bereichen der innenseitigen und/oder außenseitigen Gipfel vorgesehen sein.

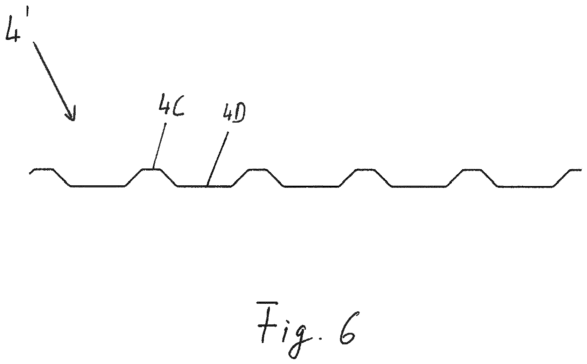

Fig. 6 zeigt eine schematische Querschnittansicht einer Faserverbundschicht 4' gemäß einer weiteren Ausführungsform.

Die hier gezeigte Faserverbundschicht 4' unterscheidet sich von der Faserverbundschicht 4 gemäß Fig. 5 durch ihre trapezförmige Strukturierung. Es handelt sich demnach um ein Trapezblech, welches im Querschnitt periodisch wiederkehrend vierfach schräg abgekantet ausgebildet ist.

Die innen- und außenseitigen Gipfel 4C, 4D weisen hier dementsprechend jeweils einen ebenen Flächenabschnitt auf. Die Breite des jeweiligen Flächenabschnitts kann angepasst an die gewünschte Breite einer Fügezone zum Spant 2 oder zur Haut 3 vorgesehen sein. Vorteilhaft sind mit einer solchen Ausführung der Faserverbundschicht 4' daher insbesondere keine oder weniger Halterungen notwendig. Es kann ebenfalls eine thermoplastische Deckschicht 6 gleich wie bei der Ausführungsform gemäß Fig. 5 vorgesehen sein.

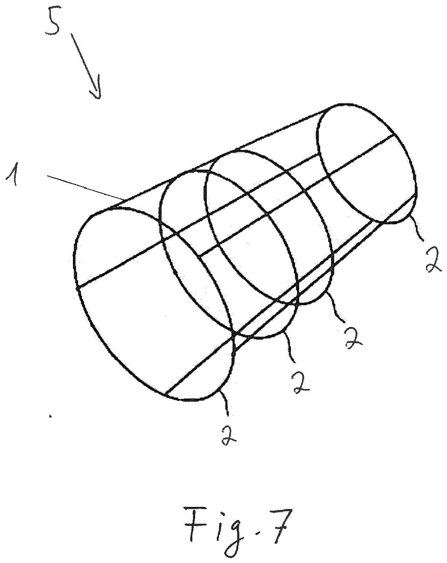

Fig. 7 zeigt eine schematische abschnittsweise Darstellung eines Rumpfes 5 eines Luft-oder Raumfahrzeugs.

Der Rumpf 5 ist mit einer erfindungsgemäßen Strukturanordnung 1 gebildet, welche hier zur besseren Übersichtlichkeit nicht im Detail dargestellt ist.

Der Rumpf 5 weist eine Mehrzahl von Spanten 2 auf, welche die mechanische Stabilität in Umfangsrichtung gewährleisten und die äußere Formgebung des Rumpfes 5 vorgeben. Rein beispielhaft sind hier insgesamt vier Spanten 2 dargestellt. Je nach Länge und Auslegung des Rumpfes kann eine daran angepasste Mehrzahl von Spanten 2 vorgesehen sein.

Die Strukturanordnung 1 verläuft dabei von Spant zu Spant. Das heißt, jeder der Spanten 2 ist mit der hier nicht im Detail gezeigten Faserverbundschicht 4 der Strukturanordnung 1 befestigt. Die Faserverbundschicht 4 gewährleistet dabei die Stabilität des Rumpfes 5 in Längsrichtung.

Ferner erstreckt sich die hier nicht im Detail gezeigte metallische Haut 3 außen über den gesamten Rumpf 5 hinweg. Diese übernimmt die Funktionalität der Gewährleistung von Impactanforderungen sowie des Blitzschutzes und des elektrischen Potentialausgleichs.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise sind neben einer Wellblechstruktur auch unterschiedlichste andere Strukturierungen der Faserverbundschicht 4 möglich. Beispielsweise kann es sich auch um ein wiederkehrendes Vierecks- oder Hutprofil handeln. Anstatt der innen- und außenseitigen Gipfel 4A, 4B wären dementsprechend innere und äußere Ebenen vorgesehen. Denkbar wären ferner Querschnittsformen mit periodisch wiederkehrenden runden und eckigen Abschnitten, beispielsweise ein Blech mit regelmäßig eingebrachten Rundnuten.

### Bezugszeichenliste

- 1: Strukturanordnung
- 2: Spant
- 3: metallische Haut
- 4; 4': Faserverbundschicht
- 4A, 4B: Gipfel
- 5: Rumpf
- 6: thermoplastische Deckschicht
- 7; 7': Clip
- 7A: Fußbereich
- 7B: Stützbereich
- 8: Halterung

## Patentansprüche

1. Strukturanordnung (1) für ein Luft- oder Raumfahrzeug, insbesondere Rumpfstrukturanordnung, mit:
einem Spant (2);
einer metallischen Haut (3); und
einer durchgehenden Faserverbundschicht (4; 4'), welche in einer quer zu dem Spant verlaufenden Längsrichtung regelmäßig strukturiert ausgebildet und zwischen dem Spant (2) und der metallischen Haut (3) angeordnet ist, wobei die Faserverbundschicht (4; 4') im Querschnitt eine sich periodisch wiederholende Form, insbesondere eine Wellblechstruktur oder eine Trapezblechstruktur, aufweist.

2. Strukturanordnung nach Anspruch 1,
**dadurch gekennzeichnet,**
**dass** die metallische Haut (3) die Faserverbundschicht (4; 4') vollständig überdeckt.

3. Strukturanordnung nach wenigstens einem der vorhergehenden Ansprüche,
**dadurch gekennzeichnet,**
**dass** die metallische Haut (3) mit einem duktilen und/oder leitfähigen Metall ausgebildet ist.

4. Strukturanordnung nach wenigstens einem der vorhergehenden Ansprüche,
**dadurch gekennzeichnet,**
**dass** die Faserverbundschicht (4; 4') in regelmäßigen Abständen an dem Spant (2) und/oder an der metallischen Haut (3) befestigt ist.

5. Strukturanordnung nach wenigstens einem der vorhergehenden Ansprüche,
**dadurch gekennzeichnet,**
**dass** die Faserverbundschicht (4; 4') und/oder der Spant (2) und/oder die metallische Haut (3) zumindest lokal eine thermoplastische Deckschicht (6) aufweist.

6. Strukturanordnung nach Anspruch 5,
**dadurch gekennzeichnet,**
**dass** die Faserverbundschicht (4; 4') mit dem Spant (2) und/oder mit der metallischen Haut (3) thermoplastisch verschweißt vorgesehen ist.

7. Strukturanordnung nach Anspruch 5 oder 6,
**dadurch gekennzeichnet,**
**dass** ein den Spant (2) stützender Clip (7; 7') mit dem Spant (2) und/oder der Faserverbundschicht (4; 4') thermoplastisch verschweißt vorgesehen ist.

8. Strukturanordnung nach Anspruch 5 oder 6,
**dadurch gekennzeichnet,**
**dass** die Faserverbundschicht (4; 4') mit dem Spant (2) und/oder mit der metallischen Haut (3) verklebt und/oder vernietet vorgesehen ist.

9. Strukturanordnung nach Anspruch 5 oder 8,
**dadurch gekennzeichnet,**
**dass** zwischen der Faserverbundschicht (4; 4') und der metallischen Haut (3) Halterungen (8) zur Befestigung vorgesehen sind.

10. Strukturanordnung nach Anspruch 9,
**dadurch gekennzeichnet,**
**dass** die Halterungen (8) zum Ausgleichen unterschiedlicher Wärmedehnungen ausgebildet sind.

11. Luft- oder Raumfahrzeug mit einem Rumpf (5), der eine Strukturanordnung (1) gemäß einem der vorangehenden Ansprüche aufweist.

12. Luft- oder Raumfahrzeug nach Anspruch 11,
**dadurch gekennzeichnet,**
**dass** der Rumpf (5) zumindest zwei Spanten (2) aufweist, wobei sich die Strukturanordnung (1) von Spant zu Spant fortsetzt.

13. Verfahren zum Herstellen einer Strukturanordnung (1), insbesondere einer Strukturanordnung gemäß einem der Ansprüche 1 bis 10, mit folgenden Verfahrensschritten:
Bereitstellen eines Spants (2), einer metallischen Haut (3) sowie einer regelmäßig strukturiert ausgebildeten durchgehenden Faserverbundschicht (4; 4'), welche im Querschnitt eine sich periodisch wiederholende Form, insbesondere eine Wellblechstruktur oder eine Trapezblechstruktur, aufweist;
Ausrichten der Faserverbundschicht (4; 4') relativ zu dem Spant (2) derart, dass sie in einer Längsrichtung quer zu dem Spant (2) strukturiert angeordnet ist;
Befestigen der Faserverbundschicht (4; 4') mit dem Spant (2); und
Befestigen der metallischen Haut (3) mit der Faserverbundschicht (4; 4').

14. Verfahren nach Anspruch 13,
**dadurch gekennzeichnet,**
**dass** die Faserverbundschicht (4; 4') und/oder der Spant (2) und/oder die metallische Haut (3) zumindest lokal eine thermoplastische Deckschicht (6) aufweist und das Befestigen zumindest teilweise mittels Thermoplastschweißen vorgenommen wird.

## Claims

1. Structural assembly (1) for an aircraft or spacecraft, in particular fuselage structural assembly, having:
a frame (2);
a metallic skin (3); and
a continuous fibre composite layer (4; 4') which is formed in a regularly structured manner in a longitudinal direction running transversely in relation to the frame and which is arranged between the frame (2) and the metallic skin (3), the fibre composite layer (4; 4') having in cross section a periodically recurring form, in particular a corrugated sheet structure or a trapezoidal sheet structure.

2. Structural assembly according to Claim 1,
**characterized**
**in that** the metallic skin (3) completely covers the fibre composite layer (4; 4').

3. Structural assembly according to at least one of the preceding claims,
**characterized**
**in that** the metallic skin (3) is formed with a ductile and/or conductive metal.

4. Structural assembly according to at least one of the preceding claims,
**characterized**
**in that** the fibre composite layer (4; 4') is fastened to the frame (2) and/or to the metallic skin (3) at regular intervals.

5. Structural assembly according to at least one of the preceding claims,
**characterized**
**in that** the fibre composite layer (4; 4') and/or the frame (2) and/or the metallic skin (3) at least locally have/has a thermoplastic cover layer (6).

6. Structural assembly according to Claim 5,
**characterized**
**in that** the fibre composite layer (4; 4') is provided as thermoplastically welded to the frame (2) and/or to the metallic skin (3).

7. Structural assembly according to Claim 5 or 6,
**characterized**
**in that** a clip (7; 7') supporting the frame (2) is provided as thermoplastically welded to the frame (2) and/or the fibre composite layer (4; 4').

8. Structural assembly according to Claim 5 or 6,
**characterized**
**in that** the fibre composite layer (4; 4') is provided as adhesively bonded and/or riveted to the frame (2) and/or to the metallic skin (3).

9. Structural assembly according to Claim 5 or 8,
**characterized**
**in that** fastening mounts (8) are provided between the fibre composite layer (4; 4') and the metallic skin (3).

10. Structural assembly according to Claim 9,
**characterized**
**in that** the mounts (8) are formed to compensate for different thermal expansions.

11. Aircraft or spacecraft with a fuselage (5) having a structural assembly (1) according to one of the preceding claims.

12. Aircraft or spacecraft according to Claim 11,
**characterized**
**in that** the fuselage (5) has at least two frames (2), the structural assembly (1) continuing from frame to frame.

13. Method for producing a structural assembly (1), in particular a structural assembly according to one of Claims 1 to 10, comprising the following method steps:
providing a frame (2), a metallic skin (3) and a continuous fibre composite layer (4; 4') which is formed in a regularly structured manner and has in cross section a periodically recurring form, in particular a corrugated sheet structure or a trapezoidal sheet structure;
aligning the fibre composite layer (4; 4') relative to the frame (2) such that it is arranged in a structured manner in a longitudinal direction that is transverse in relation to the frame (2);
fastening the fibre composite layer (4; 4') to the frame (2); and
fastening the metallic skin (3) to the fibre composite layer (4; 4').

14. Method according to Claim 13,
**characterized**
**in that** the fibre composite layer (4; 4') and/or the frame (2) and/or the metallic layer (3) at least locally have/has a thermoplastic cover layer (6) and the fastening is carried out at least partially by means of thermoplastic welding.

## Revendications

1. Arrangement de structure (1) pour un véhicule aérien ou spatial, notamment arrangement de structure de coque, comprenant :
une membrure (2) ;
une enveloppe métallique (3) ; et
une couche composite en fibres (4 ; 4') continue, qui est configurée à structure régulière dans une direction longitudinale s'étendant transversalement par rapport à la membrure et est disposée entre la membrure (2) et l'enveloppe métallique (3), la couche composite en fibres (4 ; 4') possédant, en section transversale, une forme qui se répète périodiquement, notamment une structure en tôle ondulée ou une structure en tôle trapézoïdale.

2. Arrangement de structure selon la revendication 1, **caractérisé en ce que** l'enveloppe métallique (3) recouvre entièrement la couche composite en fibres (4 ; 4').

3. Arrangement de structure selon au moins l'une des revendications précédentes, **caractérisé en ce que** l'enveloppe métallique (3) est formée avec un métal ductile et/ou conducteur.

4. Arrangement de structure selon l'une des revendications précédentes, **caractérisé en ce que** la couche composite en fibres (4 ; 4') est fixée à la membrure (2) et/ou à l'enveloppe métallique (3) à intervalles réguliers.

5. Arrangement de structure selon l'une des revendications précédentes, **caractérisé en ce que** la couche composite en fibres (4 ; 4') et/ou la membrure (2) et/ou l'enveloppe métallique (3) possède au moins localement une couche de recouvrement (6) thermoplastique.

6. Arrangement de structure selon la revendication 5, **caractérisé en ce que** la couche composite en fibres (4 ; 4') est conçue soudée de manière thermoplastique avec la membrure (2) et/ou avec l'enveloppe métallique (3).

7. Arrangement de structure selon la revendication 5 ou 6, **caractérisé en ce qu'**une agrafe (7 ; 7') qui soutient la membrure (2) est conçue soudée de manière thermoplastique avec la membrure (2) et/ou avec la couche composite en fibres (4 ; 4').

8. Arrangement de structure selon la revendication 5 ou 6, **caractérisé en ce que** la couche composite en fibres (4 ; 4') est conçue collée et/ou rivetée avec la membrure (2) et/ou avec l'enveloppe métallique (3).

9. Arrangement de structure selon la revendication 5 ou 8, **caractérisé en ce que** des éléments de maintien (8) servant à la fixation sont disposés entre la couche composite en fibres (4 ; 4') et l'enveloppe métallique (3).

10. Arrangement de structure selon la revendication 9, **caractérisé en ce que** les éléments de maintien (8) sont configurés pour compenser différentes dilatations thermiques.

11. Véhicule aérien ou spatial comprenant une coque (5), qui possède un arrangement de structure (1) selon l'une des revendications précédentes.

12. Véhicule aérien ou spatial selon la revendication 11, **caractérisé en ce que** la coque (5) possède au moins deux membrures (2), l'arrangement de structure (1) se poursuivant d'une membrure à l'autre.

13. Procédé de fabrication d'un arrangement de structure (1), notamment d'un arrangement de structure selon l'une des revendications 1 à 10, comprenant les étapes suivantes :
fourniture d'une membrure (2), d'une enveloppe métallique (3) ainsi que d'une couche composite en fibres (4 ; 4') continue configurée à structure régulière qui possède, en section transversale, une forme qui se répète périodiquement, notamment une structure en tôle ondulée ou une structure en tôle trapézoïdale ;
orientation de la couche composite en fibres (4 ; 4') par rapport à la membrure (2) de telle sorte qu'elle est disposée de manière structurée dans une direction longitudinale transversalement par rapport à la membrure (2) ;
fixation de la couche composite en fibres (4 ; 4') à la membrure (2) ; et
fixation de l'enveloppe métallique (3) à la couche composite en fibres (4 ; 4').

14. Procédé selon la revendication 13, **caractérisé en ce que** la couche composite en fibres (4 ; 4') et/ou la membrure (2) et/ou l'enveloppe métallique (3) possèdent au moins localement une couche de recouvrement (6) thermoplastique et la fixation est effectuée au moins partiellement au moyen de soudage thermoplastique.
